(19) **Europäisches Patentamt / European Patent Office / Office européen des brevets**

(11) **EP 4 224 908 A1**

(12) **EUROPEAN PATENT APPLICATION**
published in accordance with Art. 153(4) EPC

(43) Date of publication:
**09.08.2023 Bulletin 2023/32**

(21) Application number: **21874454.8**

(22) Date of filing: **28.09.2021**

(51) International Patent Classification (IPC):
**H04W 24/02** (2009.01)

(52) Cooperative Patent Classification (CPC):
**H04W 24/02; H04W 36/04; H04W 52/02;**
**Y02D 30/70**

(86) International application number:
**PCT/CN2021/121243**

(87) International publication number:
**WO 2022/068794 (07.04.2022 Gazette 2022/14)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **29.09.2020 CN 202011053366**

(71) Applicant: **Vivo Mobile Communication Co., Ltd.**
**Dongguan, Guangdong 523863 (CN)**

(72) Inventor: **CHEN, Li**
**Dongguan, Guangdong 523863 (CN)**

(74) Representative: **Conti, Marco**
**Bugnion S.p.A.**
**Via di Corticella, 87**
**40128 Bologna (IT)**

(54) **CELL SELECTION/RESELECTION METHOD AND APPARATUS, TERMINAL, AND READABLE STORAGE MEDIUM**

(57) This application discloses a cell selection and reselection method, an apparatus, a terminal, and a readable storage medium. The method includes: measuring a first reference signal and/or a second reference signal; and choosing to camp on a first cell or a second cell based on a measurement result. The first reference signal is a single-frequency network SFN specific reference signal, the second reference signal is a cell/transmission reception point cell/TRP specific reference signal, the first cell is an SFN specific cell, and the second cell is a cell/TRP specific cell or TRP.

FIG. 2

EP 4 224 908 A1

**Description**

**CROSS-REFERENCE TO RELATED APPLICATIONS**

This application claims priority to Chinese Patent Application No. 202011053366.7 filed in China on September 29, 2020, which is incorporated herein by reference in its entirety.

**TECHNICAL FIELD**

This application relates to the field of communications technologies, and in particular, to a cell selection and reselection method, an apparatus, a terminal, and a readable storage medium.

**BACKGROUND**

As frequency bands deployed by future communications systems become higher and higher, a coverage area of a cell (cell) or a transmission reception point (transmission reception point, TRP) becomes smaller and smaller. In addition, application scenarios supported by mobile communication systems in the future are increasingly rich, including more high-speed scenarios. This leads to frequent mobility (including handover (handover) in a connected mode (connected mode) and a cell selection/reselection (cell selection/reselection) in an idle (idle) or inactive mode(inactive mode)). Therefore, more terminal measurements are introduced, which increases power consumption of a terminal.

**SUMMARY**

Embodiments of this application are intended to provide a cell selection and reselection method, an apparatus, a terminal, and a readable storage medium, which can solve a problem of large power consumption when the terminal performs cell selection and reselection.
To resolve the foregoing technical problem, this application is implemented as follows:
According to a first aspect, a cell selection and reselection method is provided and applied to a terminal, including:

measuring a first reference signal and/or a second reference signal; and
choosing to camp on a first cell or a second cell based on a measurement result, where
the first reference signal is a single-frequency network SFN specific reference signal, the second reference signal is a cell/transmission reception point cell/TRP specific reference signal, the first cell is an SFN specific cell, and the second cell is a cell/TRP specific cell or TRP.

According to a second aspect, a cell selection and reselection apparatus is provided and applied to a terminal, including:

a measurement module, configured to measure a first reference signal and/or a second reference signal; and
a camping module, configured to choose to camp on a first cell or a second cell based on a measurement result, where
the first reference signal is a single-frequency network SFN specific reference signal, the second reference signal is a cell/transmission reception point cell/TRP specific reference signal, the first cell is an SFN specific cell, and the second cell is a cell/TRP specific cell or TRP.

According to a third aspect, a terminal is provided, including a processor, a memory, and a program or an instruction stored in the memory and capable of running on the processor, where when the program and the instruction is executed by the processor, the steps of the cell selection and reselection method according to the first aspect are implemented.
According to a fourth aspect, a readable storage medium is provided, where the readable storage medium stores a program or an instruction, and when the program or the instruction is executed by a processor, the steps of the cell selection and reselection method according to the first aspect are implemented.
According to a fifth aspect, a chip is provided, where the chip includes a processor and a communications interface, the communications interface is coupled to the processor, and the processor is configured to run a program or an instruction of a network side device, to implement the cell selection and reselection method according to the first aspect.
In the embodiments of this application, the SFN specific reference signal and/or cell/TRP specific reference signal are measured, and the SFN specific cell or cell/TRP specific cell or TRP is chosen to be camped based on the measurement result, so that the terminal can flexibly perform cell selection or cell reselection between the SFN specific cell or cell/TRP specific cell or TRP while currently selection and reselection can only be performed in cells of the cell/TRP, thereby effectively reducing power consumption of the terminal.

**BRIEF DESCRIPTION OF DRAWINGS**

> FIG. 1a is a schematic diagram of an SFN architecture;
> FIG. 1b is a schematic diagram of an intensive network architecture;
> FIG. 1c is a flowchart of contention based random access;
> FIG. 1d is a flowchart of contention free random access;
> FIG. 2 is a flowchart of a cell selection and reselection method according to an embodiment of this application;
> FIG. 3 is a schematic structural diagram of a cell selection and reselection apparatus according to an embodiment of this application; and
> FIG. 4 is a schematic structural diagram of a terminal according to an embodiment of this application.

**DESCRIPTION OF EMBODIMENTS**

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects instead of describing a specific order or sequence. It should be understood that, data termed in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that the technologies described in the embodiments of this application are not limited to long term evolution (Long Term Evolution, LTE)/LTE-Advanced (LTE-Advanced, LTE-A) systems, and may also be used in various wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application may be used interchangeably. The technologies described can be applied to both the systems and the radio technologies mentioned above as well as to other systems and radio technologies. However, in the following descriptions, a new radio (New Radio, NR) system is described for an illustration purpose, and NR terms are used in most of the following descriptions, although these technologies may also be applied to other applications than an NR system application, such as a 6th generation (6th Generation, 6G) communications system.

In the embodiments of this application, a terminal may also be referred to as a terminal device or user equipment (User Equipment, UE). The terminal may be a terminal device such as a mobile phone, a tablet personal computer (Tablet Personal Computer), a laptop computer (Laptop Computer), or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable device), vehicle user equipment (vehicle user equipment, VUE), and pedestrian user equipment (pedestrian user equipment, PUE). The wearable device includes a bracelet, a headset, and glasses. It should be noted that a specific type of the terminal is not limited in this embodiment of this application. A network side may be a base station. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a WLAN access point, a Wi-Fi node, a transmitting receiving point (Transmitting Receiving Point, TRP), or some other appropriate term in the art. As long as the same technical effect is achieved, the base station is not limited to a specific technical term. It should be noted that the base station in the NR system is taken only as an example in the embodiments of this application, but a specific type of the base station is not limited.

To better understand the solution provided in this application, the following contents are described first:

Introduction of single-frequency network (Single-Frequency Network, SFN):

SFN transmission solution: a plurality of cells or a plurality of sending points send a same signal, and there is no intra-frequency interference between different cells, and a plurality of signals can improve a signal to interference plus noise ratio (Signal to Interference plus Noise Ratio, SINR), transmission quality, and coverage. A plurality of cells that form SFN can share one cell ID, that is, a super cell (super cell) ID. A plurality of cells can send a signal through a method of SFN transmission. For example, each cell sends a wide beam. At a certain moment, the terminal can receive a wide beam sent by a plurality of cells, thereby obtaining diversity gain. In the SFN transmission solution, the terminal does not need to perform cell reselection or handover frequently between cells.

FIG. la shows an SFN super cell composed of 7 cells.

Mobility of IDLE or INACTIVE LTE:

During the movement of IDLE or INACTIVE UE, a network provides a priority of each frequency.

For an intra-frequency adjacent cell, if a measurement and evaluation value of a target (or neighbor) cell (calculated after adding an offset based on a measurement result of the target (or neighbor) cell) is better than a measurement and evaluation value of a serving cell (calculated after adding an offset based on a measurement result of the serving cell), and lasts for a duration (for example, a duration configured by a network), and the UE stays in a current serving cell exceeding a duration (for example, Is agreed by a protocol), the UE reselects to the target (or neighbor) cell.

For a high priority inter-frequency (that is, inter-frequency) or inter RAT (that is, inter-RAT) adjacent cell, if the measurement and evaluation value of the target (or neighbor) cell is greater than a threshold value and lasts for a duration (for example, a duration configured by a network), the UE reselects to the target (or neighbor) cell.

For a low priority inter-frequency (that is, inter-frequency) or inter RAT (that is, inter-RAT) adjacent cell, if the measurement and evaluation value of the target (or neighbor) cell is greater than a threshold value and the measurement and evaluation value of the current serving cell is smaller than the threshold value, and lasts for a duration (for example, a duration configured by a network), the UE reselects to the target (or neighbor) cell.

For inter frequency (that is, inter-frequency) or inter RAT (that is, inter-RAT) adjacent cell, when a priority of the target (or neighbor) frequency is the same as a priority of the current serving (or camping) frequency, the cell reselection method is the same as the reselection method of the intra-frequency cell.

The IDLE/INACTIVE UE receives a paging message sent by the network side and triggers the connection establishment process, so as to send and receive data.

Cell free or intensive network:

As shown in FIG. lb, a low frequency (for example, FR1) cell covers a larger area than a high frequency (for example, FR2) cell.

In a case that the terminal moves within the coverage of FR1, the terminal may change FR2 cells continuously, but the FR1 cell does not change.

In a case that the terminal initially activates a FR2 cell or switches a FR2 cell, the terminal needs to continuously measure signal quality of each beam. A large quantity of the beams results in a long cell activation time or cell handover time. For example, when a certain condition is met, measurement time may be as precise as a second, as follows:

$$8\text{ms}+24*T_{rs}+T_{uncertainty\_MAC}+T_{L1\text{-}RSRP, measure}+T_{L1\text{-}RSRP, report}+T_{HARQ}+T_{FineTiming}.$$

In addition, the above long measurement time results in higher UE power consumption.

Introduction of separation of centralized unit (Centralized Unit, CU) and distributed unit (Distributed Unit, DU).

In the 5G system, a base station (gNB) can place a protocol stack entity on different control units. For example, radio resource control (Radio Resource Control, RRC) and packet data convergence protocol (Packet Data Convergence Protocol, PDCP) are placed on the CU, Radio Link Control (Radio Link Control, RLC) and media access control (Media Access Control, MAC)/physical layer (Physical Layer, PHY) are placed on the DU. The CU and the DU have certain radio resource management authority. For example, the CU can manage a cell connected under the CU through an RRC message, and the DU can manage a cell connected under the DU through a MACCE message. A plurality of DUs are connected to one CU, while the CU is connected to a core network and another CU.

Basic process of terminal system access:

1. Initial network search: including synchronization signal block (Synchronization Signal Block, SSB) synchronization and system information reception. Specifically, a primary synchronization signal (Primary Synchronization Signals, PSS) is first received, and then a secondary synchronization signal (Secondary Synchronization Signals, SSS) is received, and then a physical broadcast channel (Physical Broadcast Channel, PBCH) is received. An SSB index, and information in PBCH RMRS and a master information block (Master information Block, MIB) are received.

2. Broadcasted system information (system information, SI) is received based on the above obtained information, including information required for system access.

3. Random access is performed based on the above obtained information required for system access.

Random access (RACH) procedure:

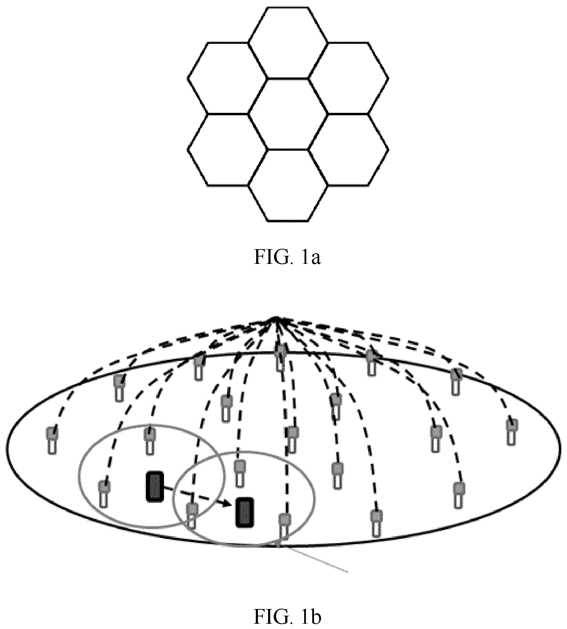

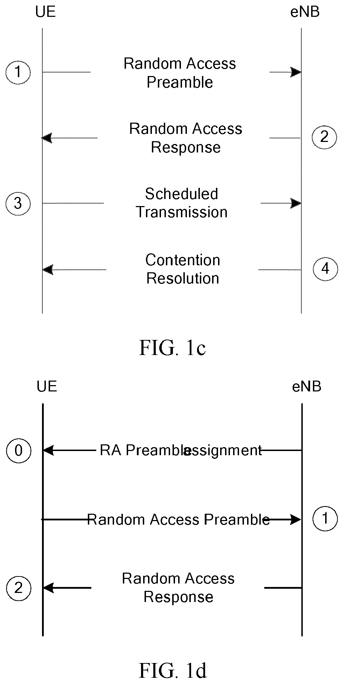

Currently, the RACH procedure is divided into a contention based random access procedure and a contention free random access procedure. The contention based random access procedure is four steps, a message 1 to a message 4, for access. As shown in FIG. 1c, the contention free random access procedure only requires two steps for access: a message 1 and a message 2, as shown in FIG. 1d.

Message 1 to 4:

Both a message 2 of the contention based random access and a message 2 of the contention free random access are random access responses (Random Access Response, RAR). UE monitors the RAR corresponding to a radio access radio network temporary identity (Radio access Radio Network Temporary Identity, RA-RNTI) in an RAR window.

Because the LTE sends a same preamble in a same PRACH resource for contention based random access, after receiving the message 2, it is necessary to send a message 3 based on UL grant in the message, and the UE carries an identity of the UE on the message 3. A contention resolution timer is started when the message 3 is sent. If the UE receives a message 4 sent by a base station before the contention resolution timer expires, the UE successfully resolves the contention. In the message, the base station carries an UE identity. The UE can determine whether the message is a message of the UE based on the UE identity carried in the message 4, to determine whether the contention is successful.

Further, to reduce an access system delay, 2-step RACH is introduced, that is, an RACH procedure which consists of two steps: a terminal sends a message A to a network side, and then the terminal receives a message B from the network side. The message A includes a function of the message 1 or a function of the message 1 and the message 3, and the message B includes a function of the message 2 or a function of the message 2 and the message 4.

Cell selection and reselection:

1. Initial cell selection process (LTE does not know which RF channel is a carrier of NR beforehand)

The UE scans all RF channels one by one based on capability of the UE (the scanning sequence is not specified in a protocol) to search for a suitable NR cell. In each scanned carrier, the E only needs to search for a cell with the highest signal quality. Once a suitable cell is found, the cell is selected for camping. In addition, the initial cell selection process is stopped, that is, the RF channels that have not been scanned do not need to be scanned.

The suitable cell shall at least meet all the following conditions:

(1) signal quality of the cell meets a preset condition, where the signal quality includes: reference signal receiving power (Reference Signal Receiving Power, RSRP) and/or reference signal receiving quality (Reference Signal Receiving Quality, RSRQ);

(2) the UE can obtain necessary system information (at least including MIB and SIB1); and

(3) a cell bar information element (cell bar IE) (which may be values of barred and not Barred) is set to not Barred, that is, the cell is not prohibited from attaching or accessing.

2. Cell reselection process

The UE evaluates whether each frequency has a suitable reselection target cell based on a priority order of frequencies provided by a network, starting from the high priority frequency. Only a suitable cell may be used as the reselection target cell.

Different frequencies may be configured with same or different frequency priorities.

Specifically:

in a case that the UE camps in a serving cell, if the cell at a frequency of NR or LTE with a higher priority meets that in a duration $Treselection_{RAT}$, the cell quality Squal is greater than a threshold value $Thresh_{X, HighQ}$, or

if the cell on the frequency of NR or another RAT with a higher priority meets that in a duration $Treselection_{RAT}$, signal strength Srxlev is greater than a threshold value $Thresh_{X, HighP}$, and the LTE has camped in the current serving cell for more than one second, the reselection process of the cell on the frequency of NR or another RAT with a higher priority is initiated.

3. Suitable (suitable cell)

A suitable cell means a cell where the UE can camp and obtain a normal service. The UE needs to have an effective USIM, and the above suitable cell at least meets the following characteristics:

(1) the cell belongs to one of the following PLMNs of the UE: a selected PLMN (Selected PLMN) or a registered PLMN (Registered PLMN) of the UE, or one PLMN in an equivalent PLMN list (Equivalent PLMN list).
(2) the cell meets a cell selection criteria;
(3) the cell is not barred for attachment (bar); and
(4) tracking area (Tracking Area, TA) information broadcast by the cell does not belong to a list of "forbidden tracking areas" (list of "Forbidden Tracking Areas").

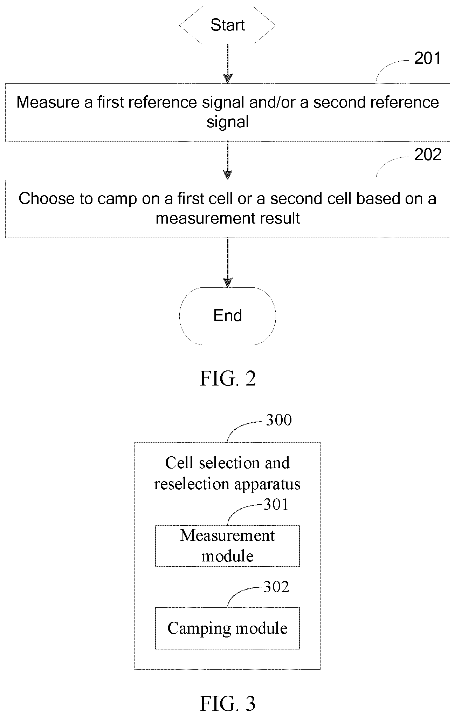

The following describes in detail the cell selection and reselection method provided in the embodiments of this application through specific embodiments and application scenarios thereof with reference to the accompanying drawings.
Referring to FIG. 2, an embodiment of this application provides a cell selection and reselection method, that is, a cell selection and/or cell reselection method, applied to a terminal. The method includes:

Step 201: Measure a first reference signal and/or a second reference signal.
Step 202: Choose to camp on a first cell or a second cell based on a measurement result.

In this embodiment of this application, the first reference signal is an SFN specific (may be called SFN specific or SFN super cell specific) reference signal, the second reference signal is a cell/TRP specific (may be called cell/TRP specific) reference signal. Correspondingly, the first cell is an SFN specific (may be called SFN layer) cell, and the second cell is a cell/TRP specific (may be called cell/TRP layer) cell.
Specifically, during actual deployment, an SFN is a super cell range, which includes a plurality of cells or TRPs. Generally, an SFN super cell is called an SFN layer. The cells corresponding to the super cell or the SFN layer are SFN specific (specific) cells. The plurality of cells or TRPs included in the SFN range are cell/TRP layers. The cell/TRP corresponding to this layer is a cell/TRP specific (specific) cell/TRP. Correspondingly, a reference signal (RS), system information (SI), a paging message (paging), and the like on the SFN layer are all called SFN specific RS, SI, paging, and the like. RS, SI, paging, and like in the cell/TRP layer are called cell/TRP specific RS, SI, paging, and the like.
First, some of the above terms are described.
Cell/TRP specific: that is, relevant configuration corresponding to each cell/TRP is independent. The configuration in the cell/TRP range is the same.
SFN/super cell specific: that is, relevant configuration corresponding to each SFN or super cell is independent. The configuration in the SFN range or super cell range is the same.
It should be noted that the first reference signal and the second reference signal above may include various types. For example, the reference signal may be a SSB, that is, an SFN specific SSB and a cell/TRP specific SSB. The reference signal may also be a channel state information reference signal (Channel-State Information reference Signal, CSI-RS), a cell reference signal (Cell Reference Signal, CRS), a sounding reference signal (Sounding Reference Signal, SRS), a demodulation reference signal (Demodulation Reference Signal, DMRS), and other reference signals.
In the embodiments of this application, the SFN specific reference signal and/or cell/TRP specific reference signal are measured, and the SFN specific cell or cell/TRP specific cell or TRP is chosen to be camped based on the measurement result, so that the terminal can flexibly perform cell selection or cell reselection between the SFN specific cell or cell/TRP specific cell or TRP while currently selection and reselection can only be performed in cells of the cell/TRP, thereby effectively reducing power consumption of the terminal.
In some implementations, a related parameter of the first reference signal is indicated by SFN specific system information (SFN specific SI) or cell/TRP specific system information (cell/TRP specific SI). A related parameter of the second reference signal is indicated by cell/TRP specific system information.
It should be noted that the related parameter of the above reference signal may include: SS block based RRM measurement timing configuration (SS block based RRM measurement timing configuration, SMTC), sync raster (sync raster), SSB ID (ID), and the like. The specific type of the related parameter is not limited in this embodiment of this application.

In some implementations, the method further includes: the terminal transferring from camping on the second cell to camping on the first cell through a cell reselection or cell selection operation, that is, transferring from camping on cell/TRP layer cell to camping on SFN layer super cell.

In some implementations, in a case that a network is deployed with high-frequency and low frequency layers (high-frequency and low frequency layers), the first cell includes a cell within the low frequency layer, and the second cell includes a cell within the high frequency layer; or in a case that a network includes a satellite communications network or a high-altitude platform station (satellite or HAPS), the first cell includes a high-altitude platform station (High Altitude Platform Station, HAPS) cell or a high orbit satellite cell, and the second cell includes a low orbit satellite cell or a cell covered by a ground base station.

Further, in some implementations, the method further includes: after camping on the first cell or the second cell, initiating a random access (RACH) or connection establishment in the second cell.

Specifically, in some implementations, the choosing to camp on a first cell or a second cell based on a measurement result includes the following steps:

determining cell quality of the first cell and the second cell based on the measurement result; and
choosing to camp on the first cell or the second cell based on the cell quality of the first cell and the second cell.

Further, the cell quality of the first cell and the second cell is determined by at least one of the following methods:

(1) determining the cell quality of the first cell based on an average value of beam measurement results;
(2) determining the cell quality of the first cell based on an average value of a preset quantity of beam measurement results;
(3) determining the cell quality of the first cell based on an average value of the beam measurement results higher than a preset measurement threshold;
(4) determining the cell quality of the first cell based on the highest beam measurement result;
(5) determining the cell quality of the first cell based on an average value of beam measurement results of N beams higher than the preset measurement threshold; and
(6) determining the cell quality of the first cell based on a quantity of beams whose beam measurement results are higher than the preset measurement threshold.

N is agreed by a protocol or configured by a network side.

Specifically, the cell quality can be determined by using one of the plurality of methods above, or by using two or more of the plurality of methods above. The camping cell can be determined by comparing the cell quality in a plurality of dimensions at the same time. For example, the camping cell is determined by comparing the cell quality in two dimensions. The two dimensions are an average value of the beam measurement results and a quantity of beams whose beam measurement results are higher than a preset measurement threshold. Other methods are similar.

On the other hand, different methods can be used to compare the cell quality under different conditions. Specifically, in a case that no beam measurement result is higher than the preset threshold, the highest beam measurement result is used to determine quality of the cell. In a case that a plurality of beam measurement results are higher than the preset threshold, the average value of the preset beam measurement results higher than the preset threshold is used to determine the quality of the cell.

The measurement result includes at least one of the following: RSRP, RSRQ, an SINR, a block error rate (Block Error Rate, BLER), and received signal strength indication (Received Signal Strength Indication, RSSI).

Further, there are specifically three cases regarding choosing to camp on the first cell or the second cell based on the cell quality of the first cell and the second cell.

Case 1: The reference signal received by the terminal includes the first reference signal and the second reference signal, that is, the system includes an SFN specific reference signal and a cell/TRP specific reference signal.

Case 2: All reference signals received by the terminal are the first reference signals, that is, all the reference signals included in the system are SFN specific reference signals.

Case 3: All the reference signals received by the terminal are the second reference signals, that is, all the reference signals included in the system are cell/TRP specific reference signals.

Case 3 can be implemented by using the process in the prior art. Details are not described herein.

For case 1, in a case that a reference signal received by the terminal includes the first reference signal and the second reference signal, a method of choosing to camp on the first cell or the second cell includes at least one of the following:

(1) based on a preset priority, preferentially choosing to camp on the first cell, that is, configuring a higher priority to an SFN layer, where the preset priority is configured by a network side or agreed by a protocol;

(2) based on a preset priority, preferentially choosing to camp on the second cell, that is, configuring a higher priority to a cell/TRP layer, where the preset priority is configured by a network side or agreed by a protocol;

(3) in a case that the cell quality of the first cell is higher than a first preset threshold (that is, an SFN layer super cell satisfies a suitable cell), choosing to camp on the first cell; or in a case that the cell quality of the first cell is lower than a second preset threshold, choosing to camp on the second cell whose cell quality is higher than a third preset threshold, where the first preset threshold, the second preset threshold, and the third preset threshold are configured by the network side;

where it should be noted that the third preset threshold value may be the same as the first preset threshold value, or the third preset threshold value may be different from the first preset threshold value;

(4) in a case that the cell quality of the second cell is higher than a fourth preset threshold (that is, a cell/TRP layer cell satisfies a suitable cell), choosing to camp on the second cell; or in a case that the cell quality of the second cell is lower than a fifth preset threshold, choosing to camp on the first cell whose cell quality is higher than a sixth preset threshold, where the fourth preset threshold, the fifth preset threshold, and the sixth preset threshold are configured by the network side;

where it should be noted that the sixth preset threshold value may be the same as the fourth preset threshold value, or the sixth preset threshold value may be different from the fourth preset threshold value;

(5) the cell quality of the first cell being higher than the cell quality of the second cell by a first value, and choosing to camp on the first cell, where the first value is configured by the network side or agreed by the protocol;

(6) the cell quality of the first cell being lower than the cell quality of the second cell by a second value, and choosing to camp on the second cell, where the second value is configured by the network side or agreed by the protocol;

where it should be noted that the first value may be the same with the second value or may be different from the second value; and

(7) choosing to camp on the first cell or the second cell, whichever has higher cell quality, that is, directly comparing cell quality of an SFN layer super cell and a cell/TRP layer cell, and selecting the best cell for camping.

Further, before the choosing to camp on the first cell or the second cell, whichever has higher cell quality, the method further includes:

(a) adding a first compensation for the cell quality of the first cell, where the first compensation is configured by the network side or agreed by the protocol; and

(b) adding a first compensation for the cell quality of the first cell, and adding a second compensation for the cell quality of the second cell, where the first compensation and the second compensation are configured by the network side or agreed by the protocol.

It should be noted that the first compensation may be the same as the second compensation or may be different from the second compensation.

Further, this embodiment of this application further includes a method of implementing the selection of the first cell and the second cell through the network side:

in a case that the first cell and the second cell are deployed at different frequencies (may be inter-frequency or inter-RAT frequency), determining a priority of the first cell and a priority of the second cell based on a frequency priority configured by the network side.

The above cell selection reselection method is applied to different scenarios:

(1) when cell selection is performed, an SFN cell is preferentially selected; and

(2) when cell selection is performed, a cell/TRP cell is preferentially selected; and when cell reselection is performed, an SFN layer super cell is selected for camping on the cell/TRP cell and the SFN layer super cell.

For case 2, in a case that all reference signals received by the terminal are the first reference signals, a method of choosing to camp on the first cell or the second cell includes at least one of the following:

(1) based on a preset priority, preferentially choosing to camp on the first cell, where the preset priority is configured by a network side or agreed by a protocol;

(2) in a case that the cell quality of the first cell is higher than a first preset threshold (that is, an SFN layer super cell satisfies a suitable cell), choosing to camp on the first cell; or in a case that the cell quality of the first cell is lower than a second preset threshold, entering any cell camp (any cell camp) mode, where the first preset threshold and the second preset threshold are configured by the network side or agreed by the protocol; and

(3) choosing to camp on the first cell with the highest cell quality, that is, selecting the best cell for camping by directly comparing the cell quality of the SFN layer super cell.

Further, when choosing to camp on the first cell with the highest cell quality, the method further includes: adding a first compensation for the cell quality of the first cell, where the first compensation is configured by the network side or agreed by the protocol.

Optionally, in some implementations, the method further includes:
before cell selection or reselection is performed, receiving first indication information from a network side, where the first indication information includes at least one of the following:

an SFN identity (ID) or an SFN index (index);
an SFN group (group) or an SFN range;
a cell/TRP included in an SFN;
whether the cell supports an SFN layer; and
an SFN to which a cell belongs.

Further, the choosing to camp on a first cell or a second cell based on a measurement result further includes:

in a case that the terminal supports the first cell, preferentially choosing to camp on the first cell, that is, in a case that the terminal supports an SFN layer super cell, based on one of the above rules, the SFN layer super cell, for example, is preferentially selected; or
in a case that the network side indicates that the first cell is supported, preferentially choosing to camp on the first cell, that is, in a case that the network indicates that an SFN super layer, based on one of the above rules, the SFN layer super cell, for example, is preferentially selected; or
in a case that the network side indicates that the terminal camps on the first cell or preferentially camp in the first cell, preferentially choosing to camp on the first cell, that is, in a case that the network sends indication to the terminal that the terminal camps or preferentially camps on an SFN layer super cell, based on one of the above rules, the SFN layer super cell is preferentially selected.

In some implementations, the network side indicates the terminal through a system message or a dedicated RRC message, where the dedicated RRC message includes at least one of the following: an RRC release (release) message and an RRC suspend (suspend) message.

It should be noted that an execution subject of the cell selection and reselection method according to an embodiment of this application may be a cell selection and reselection apparatus, or a control module for performing the cell selection and reselection method in the cell selection and reselection apparatus. In this embodiment of this application, the cell selection and reselection apparatus according to an embodiment of this application is described by using an example in which the cell selection and reselection apparatus performs the cell selection and reselection method.

Referring to FIG. 3, an embodiment of this application provides a cell selection and reselection apparatus 300, applied to a terminal and including:

a measurement module 301, configured to measure a first reference signal and/or a second reference signal; and
a camping module 302, configured to choose to camp in a first cell or a second cell based on a measurement result.

The first reference signal is a single-frequency network SFN specific reference signal, the second reference signal is a cell/transmission reception point cell/TRP specific reference signal, the first cell is an SFN specific cell, and the second cell is a cell/TRP specific cell or TRP.

In some implementations, a related parameter of the first reference signal is indicated by an SFN specific system message or a cell/TRP specific system message; or a related parameter of the first reference signal is indicated by a cell/TRP specific system message.

In some implementations, the camping module includes:

a determining unit, configured to determine cell quality of the first cell and the second cell based on the measurement result; and
a camping unit, configured to choose to camp in the first cell or the second cell based on the cell quality of the first cell and the second cell.

In some implementations, the determining unit is further configured to perform at least one of the following:

determining the cell quality of the first cell based on an average value of beam measurement results;

determining the cell quality of the first cell based on an average value of a preset quantity of beam measurement results;

determining the cell quality of the first cell based on an average value of the beam measurement results higher than a preset measurement threshold;

determining the cell quality of the first cell based on the highest beam measurement result;

determining the cell quality of the first cell based on an average value of beam measurement results of N beams higher than the preset measurement threshold; and

determining the cell quality of the first cell based on a quantity of beams whose beam measurement results are higher than the preset measurement threshold.

In some implementations, in a case that a reference signal received by the terminal includes the first reference signal and the second reference signal, the camping unit is further configured to perform at least one of the following:

based on a preset priority, preferentially choosing to camp in the first cell, where the preset priority is configured by a network side or agreed by a protocol;

based on the preset priority, preferentially choosing to camp in the second cell, where the preset priority is configured by the network side or agreed by the protocol;

in a case that the cell quality of the first cell is higher than a first preset threshold, choosing to camp in the first cell; or in a case that the cell quality of the first cell is lower than a second preset threshold, choosing to camp in the second cell whose cell quality is higher than a third preset threshold, where the first preset threshold, the second preset threshold, and the third preset threshold are configured by the network side;

in a case that the cell quality of the second cell is higher than a fourth preset threshold, choosing to camp in the second cell; or in a case that the cell quality of the second cell is lower than a fifth preset threshold, choosing to camp in the first cell whose cell quality is higher than a sixth preset threshold, where the fourth preset threshold, the fifth preset threshold, and the sixth preset threshold are configured by the network side;

the cell quality of the first cell being higher than the cell quality of the second cell by a first value, and choosing to camp in the first cell, where the first value is configured by the network side or agreed by the protocol;

the cell quality of the first cell being lower than the cell quality of the second cell by a second value, and choosing to camp in the second cell, where the second value is configured by the network side or agreed by the protocol; and

choosing to camp in the first cell or the second cell, whichever has higher cell quality.

In some implementations, the camping unit is further configured to:

add a first compensation for the cell quality of the first cell, where the first compensation is configured by the network side or agreed by the protocol;

or

add a first compensation for the cell quality of the first cell, and add a second compensation for the cell quality of the second cell, where the first compensation and the second compensation are configured by the network side or agreed by the protocol.

In some implementations, the apparatus further includes:

a determining module, configured to, in a case that the first cell and the second cell are deployed at different frequencies, determine a priority of the first cell and a priority of the second cell based on a frequency priority configured by the network side.

In some implementations, in a case that all reference signals received by the terminal are the first reference signals, the camping unit is further configured to perform at least one of the following:

based on a preset priority, preferentially choosing to camp in the first cell, where the preset priority is configured by a network side or agreed by a protocol;

in a case that the cell quality of the first cell is higher than a first preset threshold, choosing to camp in the first cell; or in a case that the cell quality of the first cell is lower than a second preset threshold, entering any cell camp mode, where the first preset threshold and the second preset threshold are configured by the network side or agreed by the protocol; and

choosing to camp in the first cell with the highest cell quality.

In some implementations, the camping unit is further configured to:

add a first compensation for the cell quality of the first cell, where the first compensation is configured by the network side or agreed by the protocol.

In some implementations, the apparatus further includes:

a receiving module, configured to, before cell selection or reselection is performed, receive first indication information from a network side, where the first indication information includes at least one of the following:

> an SFN identity or an SFN index;
> an SFN group or an SFN range;
> a cell/TRP included in an SFN;
> whether the cell supports an SFN layer; and
> an SFN to which a cell belongs.

In some implementations, the camping module is further configured to:

by performing a cell reselection or cell selection operation, transfer from camping in the second cell to camping in the first cell.

In some implementations, in a case that a network is deployed with high frequency layer and low frequency layers, the first cell includes a cell within the low frequency layer, and the second cell includes a cell within the high frequency layer;

or

in a case that a network includes a satellite communications network, the first cell includes a high-altitude platform station HAPS cell or a high orbit satellite cell, and the second cell includes a low orbit satellite cell or a cell covered by a ground base station.

In some implementations, the apparatus further includes:

a connection module, configured to, after camping in the first cell or the second cell, initiate a random access RACH or connection establishment in the second cell.

In some implementations, the camping module is further configured to:

> in a case that the terminal supports the first cell, preferentially choose to camp in the first cell;
> or
> in a case that the network side indicates that the first cell is supported, preferentially choose to camp in the first cell;
> or
> in a case that the network side indicates that the terminal camps in the first cell or preferentially camps in the first cell, preferentially choose to camp in the first cell.

In some implementations, the network side indicates the terminal through a system message or a dedicated RRC message, where the dedicated RRC message includes at least one of the following: an RRC release message and an RRC suspend message.

In the embodiments of this application, the SFN specific reference signal and/or cell/TRP specific reference signal are measured, and the SFN specific cell or cell/TRP specific cell or TRP is chosen to be camped based on the measurement result, so that the terminal can flexibly perform cell selection or cell reselection between the SFN specific cell or cell/TRP specific cell or TRP while currently selection and reselection can only be performed in cells of the cell/TRP, thereby effectively reducing power consumption of the terminal.

The cell selection and reselection apparatus in this embodiment of this application may be an apparatus, or a component, an integrated circuit, or a chip in a terminal. The apparatus may be a mobile terminal, or a non-mobile terminal. For example, the mobile terminal may include but is not limited to the foregoing types of the terminal. The non-mobile terminal may be a server, a network attached storage (Network Attached Storage, NAS), a personal computer (personal computer, PC), a television (television, TV), a teller machine, a self-service machine, or the like. This is not specifically limited in this embodiment of this application.

The cell selection and reselection apparatus in the embodiments of this application may be an apparatus with an operating system. The operating system may be an Android (Android) operating system, may be an iOS operating system, or may be another possible operating system, which is not specifically limited in the embodiments of this application.

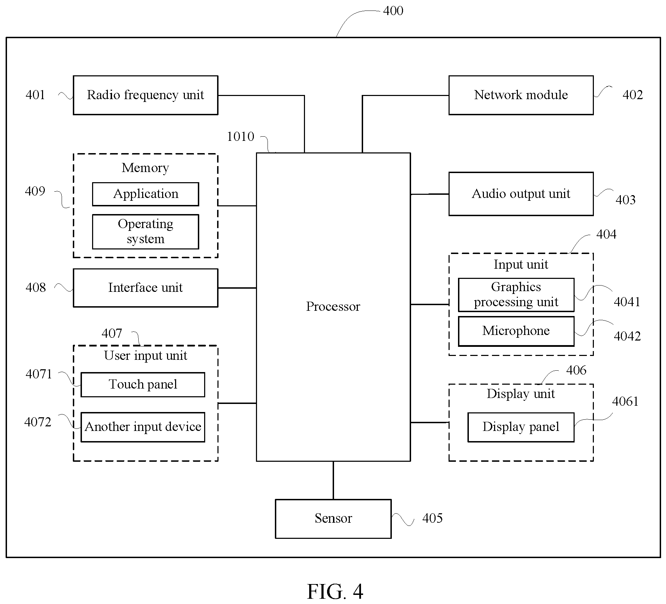

FIG. 4 is a schematic structural diagram of hardware of a terminal according to an embodiment of this application.

A terminal 400 includes but is not limited to components such as a radio frequency unit 401, a network module 402, an audio output unit 403, an input unit 404, a sensor 405, a display unit 406, a user input unit 407, an interface unit 408, a memory 409, and a processor 410.

A person skilled in the art can understand that the terminal 400 may further include a power supply (such as a battery) that supplies power to each component. The power supply may be logically connected to the processor 410 by using a power supply management system, to implement functions such as charging and discharging management, and power consumption management by using the power supply management system. The terminal structure shown in FIG. 4 constitutes no limitation on the terminal, and the terminal may include more or fewer components than those shown in the figure, or combine some components, or have different component arrangements. Details are not described herein.

It should be understood that, in this embodiment of this application, the input unit 404 may include a graphics processing unit (Graphics Processing Unit, GPU) 4041 and a microphone 4042, and the graphics processing unit 4041 processes image data of a still picture or a video obtained by an image capture apparatus (such as a camera) in a video capture mode or an image capture mode. The display unit 406 may include a display panel 4061, and the display panel 4061 may be configured in a form of a liquid crystal display, an organic light-emitting diode, or the like. The user input unit 407 includes a touch panel 4071 and another input device 4072. The touch panel 4071 is also referred to as a touchscreen. The touch panel 4071 may include two parts: a touch detection apparatus and a touch controller. The another input device 4072 may include but is not limited to a physical keyboard, a functional button (such as a volume control button or a power on/off button), a trackball, a mouse, and a joystick. Details are not described herein.

In this embodiment of this application, the radio frequency unit 401 receives downlink data from a radio access network side device and then sends the downlink data to the processor 410 for processing; and sends uplink data to the radio access network side device. Usually, the radio frequency unit 401 includes but is not limited to an antenna, at least one amplifier, a transceiver, a coupler, a low noise amplifier, a duplexer, and the like.

The memory 409 may be configured to store a software program or an instruction and various data. The memory 409 may mainly include a program or instruction storage area and a data storage area. The program or instruction storage area may store an operating system, and an application or an instruction required by at least one function (for example, a sound playing function or an image playing function). In addition, the memory 409 may include a high-speed random access memory, or may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 410 may include one or more processing units. Optionally, an application processor and a modem processor may be integrated into the processor 410. The application processor mainly processes an operating system, a user interface, an application, an instruction, or the like. The modem processor mainly processes wireless communications, for example, a baseband processor. It can be understood that, alternatively, the modem processor may not be integrated into the processor 410.

The processor 410 is configured to measure a first reference signal and/or a second reference signal.

The processor 410 is further configured to choose to camp in a first cell or a second cell based on a measurement result.

The first reference signal is a single-frequency network SFN specific reference signal, and the second reference signal is a cell/transmission reception point cell/TRP specific reference signal. Alternatively, the first cell is an SFN specific cell, and the second cell is a cell/TRP specific cell or TRP.

Optionally, a related parameter of the first reference signal is indicated by an SFN specific system message or a cell/TRP specific system message. A related parameter of the second reference signal is indicated by a cell/TRP specific system message.

Optionally, the processor 410 is further configured to determine cell quality of the first cell and the second cell based on the measurement result.

The processor 410 is further configured to choose to camp in the first cell or the second cell based on the cell quality of the first cell and the second cell.

Optionally, the processor 410 is further configured to perform at least one of the following:

determining the cell quality of the first cell based on an average value of beam measurement results;
determining the cell quality of the first cell based on an average value of a preset quantity of beam measurement results;
determining the cell quality of the first cell based on an average value of the beam measurement results higher than a preset measurement threshold;
determining the cell quality of the first cell based on the highest beam measurement result;
determining the cell quality of the first cell based on an average value of beam measurement results of N beams higher than the preset measurement threshold; and
determining the cell quality of the first cell based on a quantity of beams whose beam measurement results are higher than the preset measurement threshold.

Optionally, in a case that a reference signal received by the terminal includes the first reference signal and the second reference signal, the processor 410 is further configured to perform at least one of the following:

> based on a preset priority, preferentially choosing to camp in the first cell, where the preset priority is configured by a network side or agreed by a protocol;
> based on the preset priority, preferentially choosing to camp in the second cell, where the preset priority is configured by the network side or agreed by the protocol;
> in a case that the cell quality of the first cell is higher than a first preset threshold, choosing to camp in the first cell; or in a case that the cell quality of the first cell is lower than a second preset threshold, choosing to camp in the second cell whose cell quality is higher than a third preset threshold, where the first preset threshold, the second preset threshold, and the third preset threshold are configured by the network side;
> in a case that the cell quality of the second cell is higher than a fourth preset threshold, choosing to camp in the second cell; or in a case that the cell quality of the second cell is lower than a fifth preset threshold, choosing to camp in the first cell whose cell quality is higher than a sixth preset threshold, where the fourth preset threshold, the fifth preset threshold, and the sixth preset threshold are configured by the network side;
> the cell quality of the first cell being higher than the cell quality of the second cell by a first value, and choosing to camp in the first cell, where the first value is configured by the network side or agreed by the protocol;
> the cell quality of the first cell being lower than the cell quality of the second cell by a second value, and choosing to camp in the second cell, where the second value is configured by the network side or agreed by the protocol; and
> choosing to camp in the first cell or the second cell, whichever has higher cell quality.

Optionally, the processor 410 is further configured to:

> add a first compensation for the cell quality of the first cell, where the first compensation is configured by the network side or agreed by the protocol;
> or
> add a first compensation for the cell quality of the first cell, and add a second compensation for the cell quality of the second cell, where the first compensation and the second compensation are configured by the network side or agreed by the protocol.

Optionally, the processor 410 is further configured to, in a case that the first cell and the second cell are deployed at different frequencies, determine a priority of the first cell and a priority of the second cell based on a frequency priority configured by the network side.

Optionally, in a case that all reference signals received by the terminal are the first reference signals, the processor 410 is further configured to perform at least one of the following:

> based on a preset priority, preferentially choosing to camp in the first cell, where the preset priority is configured by a network side or agreed by a protocol;
> in a case that the cell quality of the first cell is higher than a first preset threshold, choosing to camp in the first cell; or in a case that the cell quality of the first cell is lower than a second preset threshold, entering any cell camp mode, where the first preset threshold and the second preset threshold are configured by the network side or agreed by the protocol; and
> choosing to camp in the first cell with the highest cell quality.

Optionally, the processor 410 is further configured to add a first compensation for the cell quality of the first cell, where the first compensation is configured by the network side or agreed by the protocol.

Optionally, the processor 410 is further configured to, before cell selection or reselection is performed, receive first indication information from a network side, where the first indication information includes at least one of the following:

> an SFN identity or an SFN index;
> an SFN group or an SFN range;
> a cell/TRP included in an SFN;
> whether the cell supports an SFN layer; and
> an SFN to which a cell belongs.

Optionally, the processor 410 is further configured to, by performing a cell reselection or cell selection operation, transfer from camping in the second cell to camping in the first cell.

Optionally, in a case that a network is deployed with high frequency and low frequency layers, the first cell includes a cell within the low frequency layer, and the second cell includes a cell within the high frequency layer;

or

in a case that a network includes a satellite communications network, the first cell includes a high-altitude platform station HAPS cell or a high orbit satellite cell, and the second cell includes a low orbit satellite cell or a cell covered by a ground base station.

Optionally, the processor 410 is further configured to, after camping in the first cell or the second cell, initiate a random access RACH or connection establishment in the second cell.

Optionally, the processor 410 is further configured to:

in a case that the terminal supports the first cell, preferentially choose to camp in the first cell;

or

in a case that the network side indicates that the first cell is supported, preferentially choose to camp in the first cell;

or

in a case that the network side indicates that the terminal camps in the first cell or preferentially camps in the first cell, preferentially choose to camp in the first cell.

Optionally, the network side indicates the terminal through a system message or a dedicated RRC message, where the dedicated RRC message includes at least one of the following: an RRC release message and an RRC suspend message.

An embodiment of this application further provides a readable storage medium. The readable storage medium stores a program or an instruction. When the program or the instruction is executed by a processor, the processes in the foregoing connection establishment method embodiments are implemented, and the same technical effect can be achieved. To avoid repetition, details are not described herein again.

The processor is a processor in the terminal in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip. The chip includes a processor and a communications interface, and the communications interface is coupled to the processor. The processor is configured to run a program or an instruction of a terminal device, to implement the method according to the first aspect, or various processes of the foregoing connection establishment method embodiments. Alternatively, the processor is configured to run a program or an instruction of a radio access network side device, to implement various processes of the foregoing connection establishment method embodiments. Alternatively, the processor is configured to run a program or an instruction of a core network side device, to implement various processes of the foregoing connection establishment method embodiment, with the same technical effects achieved. To avoid repetition, details are not described herein again.

It should be understood that the chip mentioned in this embodiment of this application may also be referred to as a system-level chip, a system chip, a chip system, or an on-chip system chip.

An embodiment of this application provides a program product. The program product is stored in a non-volatile readable storage medium. The program product is executed by at least one processor to implement various processes of the foregoing connection establishment method embodiments, with the same technical effects achieved. To avoid repetition, details are not described herein again.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "including a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

**Claims**

1. A cell selection and reselection method, applied to a terminal and comprising:

    measuring a first reference signal and/or a second reference signal; and
    choosing to camp on a first cell or a second cell based on a measurement result, wherein
    the first reference signal is a single-frequency network SFN specific reference signal, the second reference signal is a cell/transmission reception point cell/TRP specific reference signal, the first cell is an SFN specific cell, and the second cell is a cell/TRP specific cell or TRP.

2. The method according to claim 1, wherein
a related parameter of the first reference signal is indicated by an SFN specific system message or a cell/TRP specific system message; or a related parameter of the second reference signal is indicated by a cell/TRP specific system message.

3. The method according to claim 1, wherein the choosing to camp on a first cell or a second cell based on a measurement result comprises:

    determining cell quality of the first cell and the second cell based on the measurement result; and
    choosing to camp on the first cell or the second cell based on the cell quality of the first cell and the second cell.

4. The method according to claim 3, wherein the determining cell quality of the first cell based on the measurement result comprises at least one of the following:

    determining the cell quality of the first cell based on an average value of beam measurement results;
    determining the cell quality of the first cell based on an average value of a preset quantity of beam measurement results;
    determining the cell quality of the first cell based on an average value of the beam measurement results higher than a preset measurement threshold;
    determining the cell quality of the first cell based on the highest beam measurement result;
    determining the cell quality of the first cell based on an average value of beam measurement results of N beams higher than the preset measurement threshold; and
    determining the cell quality of the first cell based on a quantity of beams whose beam measurement results are higher than the preset measurement threshold.

5. The method according to claim 3, wherein in a case that a reference signal received by the terminal comprises the first reference signal and the second reference signal, the choosing to camp on the first cell or the second cell comprises at least one of the following:

    based on a preset priority, preferentially choosing to camp on the first cell, wherein the preset priority is configured by a network side or agreed by a protocol;
    based on the preset priority, preferentially choosing to camp on the second cell, wherein the preset priority is configured by the network side or agreed by the protocol;
    in a case that the cell quality of the first cell is higher than a first preset threshold, choosing to camp on the first cell; or in a case that the cell quality of the first cell is lower than a second preset threshold, choosing to camp on the second cell whose cell quality is higher than a third preset threshold, wherein the first preset threshold, the second preset threshold, and the third preset threshold are configured by the network side;
    in a case that the cell quality of the second cell is higher than a fourth preset threshold, choosing to camp on the second cell; or in a case that the cell quality of the second cell is lower than a fifth preset threshold, choosing to camp on the first cell whose cell quality is higher than a sixth preset threshold, wherein the fourth preset threshold, the fifth preset threshold, and the sixth preset threshold are configured by the network side;

the cell quality of the first cell being higher than the cell quality of the second cell by a first value, and choosing to camp on the first cell, wherein the first value is configured by the network side or agreed by the protocol;

the cell quality of the first cell being lower than the cell quality of the second cell by a second value, and choosing to camp on the second cell, wherein the second value is configured by the network side or agreed by the protocol; and

choosing to camp on the first cell or the second cell, whichever has higher cell quality.

6. The method according to claim 5, wherein when choosing to camp on the first cell or the second cell, whichever has higher cell quality, the method further comprises:

adding a first compensation for the cell quality of the first cell, wherein the first compensation is configured by the network side or agreed by the protocol;
or

adding a first compensation for the cell quality of the first cell, and adding a second compensation for the cell quality of the second cell, wherein the first compensation and the second compensation are configured by the network side or agreed by the protocol.

7. The method according to claim 5, further comprising:
in a case that the first cell and the second cell are deployed at different frequencies, determining a priority of the first cell and a priority of the second cell based on a frequency priority configured by the network side.

8. The method according to claim 3, wherein in a case that all reference signals received by the terminal are the first reference signals, the choosing to camp on the first cell or the second cell comprises at least one of the following:

based on a preset priority, preferentially choosing to camp on the first cell, wherein the preset priority is configured by a network side or agreed by a protocol;
in a case that the cell quality of the first cell is higher than a first preset threshold, choosing to camp on the first cell; or in a case that the cell quality of the first cell is lower than a second preset threshold, entering any cell camp mode, wherein the first preset threshold and the second preset threshold are configured by the network side or agreed by the protocol; and
choosing to camp on the first cell with the highest cell quality.

9. The method according to claim 8, wherein when choosing to camp on the first cell with the highest cell quality, the method further comprises:
adding a first compensation for the cell quality of the first cell, wherein the first compensation is configured by the network side or agreed by the protocol.

10. The method according to claim 1, further comprising:
before cell selection or reselection is performed, receiving first indication information from a network side, wherein the first indication information comprises at least one of the following:

an SFN identity or an SFN index;
an SFN group or an SFN range;
a cell/TRP comprised in an SFN;
whether the cell supports an SFN layer; and
an SFN to which a cell belongs.

11. The method according to claim 1, further comprising:
by performing a cell reselection or cell selection operation, transferring from camping on the second cell to camping on the first cell.

12. The method according to claim 1, wherein

in a case that a network is deployed with high frequency and low frequency layers, the first cell comprises a cell within the low frequency layer, and the second cell comprises a cell within the high frequency layer;
or

in a case that a network comprises a satellite communications network, the first cell comprises a high-altitude platform station HAPS cell or a high orbit satellite cell, and the second cell comprises a low orbit satellite cell or a cell covered by a ground base station.

13. The method according to claim 1, further comprising:
after camping on the first cell or the second cell, initiating a random access RACH or connection establishment in the second cell.

14. The method according to claim 5 or 8, wherein the choosing to camp on the first cell or the second cell further comprises:

in a case that the terminal supports the first cell, preferentially choosing to camp in the first cell;
or
in a case that the network side indicates that the first cell is supported, preferentially choosing to camp on the first cell;
or
in a case that the network side indicates that the terminal camps on the first cell or preferentially camps on the first cell, preferentially choosing to camp on the first cell.

15. The method according to claim 14, wherein
the network side indicates the terminal through a system message or a dedicated RRC message, wherein the dedicated RRC message comprises at least one of the following: an RRC release message and an RRC suspend message.

16. A cell selection and reselection apparatus, applied to a terminal and comprising:

a measurement module, configured to measure a first reference signal and/or a second reference signal; and
a camping module, configured to choose to camp on a first cell or a second cell based on a measurement result, wherein
the first reference signal is a single-frequency network SFN specific reference signal, the second reference signal is a cell/transmission reception point cell/TRP specific reference signal, the first cell is an SFN specific cell, and the second cell is a cell/TRP specific cell or TRP.

17. The apparatus according to claim 16, wherein
a related parameter of the first reference signal is indicated by an SFN specific system message or a cell/TRP specific system message; or a related parameter of the second reference signal is indicated by a cell/TRP specific system message.

18. The apparatus according to claim 16, wherein the camping module comprises:

a determining unit, configured to determine cell quality of the first cell and the second cell based on the measurement result; and
a camping unit, configured to choose to camp on the first cell or the second cell based on the cell quality of the first cell and the second cell.

19. The apparatus according to claim 18, wherein the determining unit is further configured to perform at least one of the following:

determining the cell quality of the first cell based on an average value of beam measurement results;
determining the cell quality of the first cell based on an average value of a preset quantity of beam measurement results;
determining the cell quality of the first cell based on an average value of the beam measurement results higher than a preset measurement threshold;
determining the cell quality of the first cell based on the highest beam measurement result;
determining the cell quality of the first cell based on an average value of beam measurement results of N beams higher than the preset measurement threshold; and
determining the cell quality of the first cell based on a quantity of beams whose beam measurement results are higher than the preset measurement threshold.

20. The apparatus according to claim 18, wherein in a case that a reference signal received by the terminal comprises the first reference signal and the second reference signal, the camping unit is further configured to perform at least one of the following:

based on a preset priority, preferentially choosing to camp on the first cell, wherein the preset priority is configured by a network side or agreed by a protocol;
based on the preset priority, preferentially choosing to camp on the second cell, wherein the preset priority is configured by the network side or agreed by the protocol;
in a case that the cell quality of the first cell is higher than a first preset threshold, choosing to camp on the first cell; or in a case that the cell quality of the first cell is lower than a second preset threshold, choosing to camp on the second cell whose cell quality is higher than a third preset threshold, wherein the first preset threshold, the second preset threshold, and the third preset threshold are configured by the network side;
in a case that the cell quality of the second cell is higher than a fourth preset threshold, choosing to camp on the second cell; or in a case that the cell quality of the second cell is lower than a fifth preset threshold, choosing to camp on the first cell whose cell quality is higher than a sixth preset threshold, wherein the fourth preset threshold, the fifth preset threshold, and the sixth preset threshold are configured by the network side;
the cell quality of the first cell being higher than the cell quality of the second cell by a first value, and choosing to camp on the first cell, wherein the first value is configured by the network side or agreed by the protocol;
the cell quality of the first cell being lower than the cell quality of the second cell by a second value, and choosing to camp on the second cell, wherein the second value is configured by the network side or agreed by the protocol; and
choosing to camp on the first cell or the second cell, whichever has higher cell quality.

21. The apparatus according to claim 20, wherein the camping unit is further configured to:

add a first compensation for the cell quality of the first cell, wherein the first compensation is configured by the network side or agreed by the protocol;
or
add a first compensation for the cell quality of the first cell, and add a second compensation for the cell quality of the second cell, wherein the first compensation and the second compensation are configured by the network side or agreed by the protocol.

22. The apparatus according to claim 20, further comprising:
a determining module, configured to, in a case that the first cell and the second cell are deployed at different frequencies, determine a priority of the first cell and a priority of the second cell based on a frequency priority configured by the network side.

23. The apparatus according to claim 18, wherein in a case that all reference signals received by the terminal are the first reference signals, the camping unit is further configured to perform at least one of the following:

based on a preset priority, preferentially choosing to camp on the first cell, wherein the preset priority is configured by a network side or agreed by a protocol;
in a case that the cell quality of the first cell is higher than a first preset threshold, choosing to camp on the first cell; or in a case that the cell quality of the first cell is lower than a second preset threshold, entering any cell camp mode, wherein the first preset threshold and the second preset threshold are configured by the network side or agreed by the protocol; and
choosing to camp on the first cell with the highest cell quality.

24. The apparatus according to claim 23, wherein the camping unit is further configured to:
add a first compensation for the cell quality of the first cell, wherein the first compensation is configured by the network side or agreed by the protocol.

25. The apparatus according to claim 16, further comprising:
a receiving module, configured to, before cell selection or reselection is performed, receive first indication information from a network side, wherein the first indication information comprises at least one of the following:

an SFN identity or an SFN index;
an SFN group or an SFN range;
a cell/TRP comprised in an SFN;

whether the cell supports an SFN layer; and
an SFN to which a cell belongs.

26. The apparatus according to claim 16, wherein the camping module is further configured to:
by performing a cell reselection or cell selection operation, transfer from camping on the second cell to camping on the first cell.

27. The apparatus according to claim 16, wherein

in a case that a network is deployed with high frequency and low frequency layers, the first cell comprises a cell within the low frequency layer, and the second cell comprises a cell within the high frequency layer;
or
in a case that a network comprises a satellite communications network, the first cell comprises a high-altitude platform station HAPS cell or a high orbit satellite cell, and the second cell comprises a low orbit satellite cell or a cell covered by a ground base station.

28. The apparatus according to claim 16, further comprising:
a connection module, configured to, after camping on the first cell or the second cell, initiate a random access RACH or connection establishment in the second cell.

29. The apparatus according to claim 20 or 23, wherein the camping module is further configured to:

in a case that the terminal supports the first cell, preferentially choose to camp on the first cell;
or
in a case that the network side indicates that the first cell is supported, preferentially choose to camp on the first cell;
or
in a case that the network side indicates that the terminal camps on the first cell or preferentially camps on the first cell, preferentially choose to camp on the first cell.

30. The apparatus according to claim 29, wherein
the network side indicates the terminal through a system message or a dedicated RRC message, wherein the dedicated RRC message comprises at least one of the following: an RRC release message and an RRC suspend message.

31. A terminal, comprising a processor, a memory, and a program or an instruction stored in the memory and capable of running on the processor, wherein when the program or the instruction is executed by the processor, the steps of the cell selection and reselection method according to any one of claims 1 to 15 are implemented.

32. A readable storage medium, wherein the readable storage medium stores a program or an instruction, and when the program or the instruction is executed by a processor, the steps of the cell selection and reselection method according to any one of claims 1 to 15 are implemented.

33. A chip, wherein the chip comprises a processor and a communications interface, the communications interface is coupled to the processor, and the processor is configured to run a program or an instruction, to implement the steps of the cell selection and reselection method according to any one of claims 1 to 15.

34. A program product, wherein the program product is stored in a non-volatile readable storage medium, and the program product is executed by at least one processor, to implement the steps of the cell selection and reselection method according to any one of claims 1 to 15.

35. A terminal, configured to perform the steps of the cell selection and reselection method according to any one of claims 1 to 15.

FIG. 1a

FIG. 1b

FIG. 1c

FIG. 1d

```
        ┌──────────┐
        │  Start   │
        └────┬─────┘
             │                         ╱─ 201
             ▼
┌─────────────────────────────────────────────┐
│ Measure a first reference signal and/or a    │
│ second reference signal                      │
└──────────────────┬──────────────────────────┘
                   │                     ╱─ 202
                   ▼
┌─────────────────────────────────────────────┐
│ Choose to camp on a first cell or a second   │
│ cell based on a measurement result           │
└──────────────────┬──────────────────────────┘
                   │
                   ▼
              ┌─────────┐
              │   End   │
              └─────────┘
```

FIG. 2

```
                    ╱─ 300
┌──────────────────────────────┐
│  Cell selection and          │
│  reselection apparatus        │
│            ╱─301              │
│  ┌────────────────────────┐  │
│  │   Measurement          │  │
│  │   module               │  │
│  └────────────────────────┘  │
│            ╱─302              │
│  ┌────────────────────────┐  │
│  │  Camping module        │  │
│  └────────────────────────┘  │
└──────────────────────────────┘
```

FIG. 3

FIG. 4

## INTERNATIONAL SEARCH REPORT

| International application No. |
|---|
| **PCT/CN2021/121243** |

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNPAT, CNKI, EPODOC, WPI, 3GPP: 选择, 重选, 驻留, 参考信号, 同步信号, 测量, 单频网, 同频网, 传输接收点, 小区, select, reselect, camp, RS, SS, measure, SFN, TRP, cell

### C. DOCUMENTS CONSIDERED TO BE RELEVANT

| Category* | Citation of document, with indication, where appropriate, of the relevant passages | Relevant to claim No. |
|---|---|---|
| X | CN 108024278 A (CHINA ACADEMY OF TELECOMMUNICATIONS TECHNOLOGY) 11 May 2018 (2018-05-11) description, paragraphs 191-282, 499-501 | 1-35 |
| X | CN 107690171 A (CHINA ACADEMY OF TELECOMMUNICATIONS TECHNOLOGY) 13 February 2018 (2018-02-13) description paragraphs 94-151 | 1-35 |
| A | EP 2387279 A1 (PANASONIC CORPORATION) 16 November 2011 (2011-11-16) entire document | 1-35 |
| A | MEDIATEK INC. "IDLE mode operation in NR" *3GPP TSG-RAN WG2 Meeting #95bis R2-166107*, 14 October 2016 (2016-10-14), entire document | 1-35 |

☐ Further documents are listed in the continuation of Box C.    ☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **08 December 2021** | **06 January 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/121243**

| Patent document cited in search report | | | Publication date (day/month/year) | Patent family member(s) | | | Publication date (day/month/year) |
|---|---|---|---|---|---|---|---|
| CN | 108024278 | A | 11 May 2018 | None | | | |
| CN | 107690171 | A | 13 February 2018 | WO | 2018024192 | A1 | 08 February 2018 |
| EP | 2387279 | A1 | 16 November 2011 | WO | 2011141073 | A1 | 17 November 2011 |

Form PCT/ISA/210 (patent family annex) (January 2015)

**EP 4 224 908 A1**

**REFERENCES CITED IN THE DESCRIPTION**

**Patent documents cited in the description**

- CN 202011053366